# EUROPEAN PATENT APPLICATION

(11) **EP 4 365 552 A1**
(43) Date of publication of application: **08.05.2024**
(21) Application number: 22832043.8
(22) Date of filing: 28.06.2022
(51) Int. Cl.: G01C 21/30

(54) **VEHICLE TRAJECTORY DEVIATION CORRECTION METHOD AND APPARATUS, AND ELECTRONIC DEVICE**

(30) Priority: 28.06.2021 CN 202110719336
(71) Applicant: China Mobile Shanghai ICT Co., Ltd, Shanghai 201206 (CN); CM Intelligent Mobility Network Co., Ltd., Shanghai 201206 (CN); CHINA MOBILE COMMUNICATIONS GROUP CO., LTD., Beijing 100032 (CN)
(72) Inventor: FU, Guochun, Shanghai 201206 (CN); WANG, Jianqiu, Shanghai 201206 (CN); ZHU, Yunzhi, Shanghai 201206 (CN)
(74) Representative: GPI Brevets
(86) International application number: PCT/CN2022/101911
(87) International publication number: WO 2023/274229

(57) **Abstract**

The present disclosure provides a vehicle trajectory deviation correction method and apparatus, and electronic device. The method include: obtaining a first road trajectory, wherein the first road trajectory includes multiple first trajectory points; obtaining trajectory display information of the first road trajectory with respect to an electronic map, wherein the trajectory display information includes information of road positions on the electronic map that match the multiple first trajectory points; splitting the first road trajectory into N trajectory segments based on a road structure of the first road trajectory, each trajectory segment including M consecutive first trajectory points, and each trajectory segment having a single path direction which is the path direction from the first to the last of the M first trajectory points in the trajectory segment; correcting a vehicle trajectory deviation on the electronic map based on the N trajectory segments and the trajectory display information. Embodiments of the present disclosure can make the applicable scene of the vehicle trajectory deviation correction method unlimited.

## Description

### CROSS-REFERENCE TO RELATED APPLICATION

The present application claims priority to the Chinese patent application No. 202110719336.3 filed in China on June 28, 2021, a disclosure of which is incorporated herein by reference in its entirety.

### TECHNICAL FIELD

The present disclosure relates to the field of Internet of Vehicles technology, in particular to a vehicle trajectory deviation correction method and apparatus, and electronic device.

### BACKGROUND

With the rapid development of the Internet of Things, the application of Internet of Vehicles technology is becoming more and more widespread. In Internet of Vehicles technology, the location of a vehicle can be monitored in real-time and displayed on an electronic map. To improve the display effect of the vehicle trajectory on the electronic map, it is usually necessary to correct deviations of the vehicle trajectory based on the vehicle's location.

The conventional manner of vehicle trajectory deviation correction is generally to perform trajectory deviation correction in conjunction with the historical vehicle trajectory. The conventional manner has significant scene constraints and limited applicability.

### SUMMARY

Embodiments of the present disclosure provide a vehicle trajectory deviation correction method and apparatus, and electronic device, so as to solve the problem of conventional vehicle trajectory deviation correction method: limited applicability and significant scene constraints.

In a first aspect, an embodiment of the present disclosure provides a vehicle trajectory deviation correction method, including:
obtaining a first road trajectory, wherein the first road trajectory includes a plurality of first trajectory points;
obtaining trajectory display information of the first road trajectory with respect to an electronic map, wherein the trajectory display information includes information of road positions on the electronic map that match the plurality of first trajectory points;
splitting the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
correcting a vehicle trajectory deviation on the electronic map based on the N trajectory segments and the trajectory display information.

In a second aspect, an embodiment of the present disclosure provides a vehicle trajectory deviation correction apparatus, including:
a first obtaining module, configured to obtain a first road trajectory, wherein the first road trajectory includes a plurality of first trajectory points;
a second obtaining module, configured to obtain trajectory display information of the first road trajectory with respect to an electronic map, wherein the trajectory display information includes information of road positions on the electronic map that match the plurality of first trajectory points;
a splitting module, configured to split the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
a vehicle trajectory deviation correction module, configured to correct a vehicle trajectory deviation on the electronic map based on the N trajectory segments and the trajectory display information.

In a third aspect, an embodiment of the present disclosure provides an electronic device, including: a processor, a memory, and a computer program stored in the memory and capable of running on the processor, wherein the processor is configured to execute the computer program to implement the steps of the foregoing vehicle trajectory deviation correction method.

In a fourth aspect, an embodiment of the present disclosure provides a computer-readable storage medium storing therein a computer program, wherein the computer program is configured to be executed by a processor to implement the steps of the foregoing vehicle trajectory deviation correction method.

In embodiments of the present disclosure, by obtaining a first road trajectory, wherein the first road trajectory includes a plurality of first trajectory points; obtaining trajectory display information of the first road trajectory with respect to an electronic map, wherein the trajectory display information includes information of road positions on the electronic map that match the plurality of first trajectory points; splitting the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment; correcting a vehicle trajectory deviation on the electronic map based on the N trajectory sections and the trajectory display information, the first road trajectory is structured and split into N trajectory segments, subsequently real-time vehicle trajectory deviation correction can be performed directly based on the N trajectory segments, making the applicable scene of the method unconstrained.

### BRIEF DESCRIPTION OF THE DRAWINGS

In order to more clearly illustrate the technical solutions in the embodiments of the present disclosure, the drawings needed for the description of the embodiments of the present disclosure are briefly introduced below. Apparently, the drawings described below are only some embodiments of the present disclosure, and other drawings may be obtained by persons of ordinary skill in the art based on these drawings without creative efforts.
Fig. 1 is a schematic flowchart of a vehicle trajectory deviation correction method according to an embodiment of the present disclosure;
Fig. 2 is a schematic view of a road trajectory collected by a trajectory collection vehicle;
Fig. 3 is a schematic view showing a first road trajectory without map matching;
Fig. 4 is a schematic view showing a first road trajectory with map matching;
Fig. 5 is a schematic view of splitting a first road trajectory;
Fig. 6 is a schematic view of structured elements of a trajectory segment.
Fig. 7 is a schematic view of determining a target trajectory point;
Fig. 8 is another schematic view of determining a target trajectory point;
Fig. 9 is a schematic flowchart of a specific example of a vehicle trajectory deviation correction method according to an embodiment of the present disclosure;
Fig. 10 is a schematic structural view of a vehicle trajectory deviation correction apparatus according to an embodiment of the present disclosure;
Fig. 11 is a schematic structural view of an electronic device according to an embodiment of the present disclosure.

### DETAILED DESCRIPTION

Currently, satellite positioning technology is widely used in various positioning and navigation systems. However, satellite positioning has certain errors. The errors usually come from two aspects. One aspect is the performance of the positioning chips in electronic devices, and chips with good anti-interference performance usually have higher positioning accuracy. The other aspect is environmental interferences, including satellite signal occlusion, signal refraction, atmospheric or ionospheric interference. For example, in places with dense high-rise buildings or bad weather conditions, due to multiple refractions and reflections of Global Positioning System (GPS) signals, GPS signal errors and drift occur.

Therefore, trajectory drift of satellite positioning data is inevitable in actual use, and trajectory deviation correction is a necessary technical processing process. In related art, the vehicle trajectory deviation correction method is commonly performed in conjunction with the historical vehicle trajectory. For example, a historical-trajectory-based deviation correction scheme is applied to operating vehicles. The scheme has significant scene constraints and limited applicability. In view of this, embodiments of the present disclosure provide a new solution of vehicle trajectory deviation correction.

The following clearly describes the technical solutions in the embodiments of the present disclosure with reference to the accompanying drawings in the embodiments of the present disclosure. Apparently, the described embodiments are only some rather than all of the embodiments of the present disclosure. All other embodiments obtained by persons of ordinary skill in the art based on the embodiments of the present disclosure without creative efforts shall fall within the scope of the present disclosure.

Firstly, a vehicle trajectory deviation correction method according to an embodiment of the present disclosure is described hereinafter.

It should be noted that the vehicle trajectory deviation correction method provided by embodiments of the present disclosure relates to the field of Internet of Vehicles technology, and can be widely applied to multiple scenarios such as map navigation, location determination, and distance measurement. The method can be executed by the vehicle trajectory deviation correction apparatus according to an embodiment of the present disclosure. The vehicle trajectory deviation correction apparatus can reside in any electronic device to execute the vehicle trajectory deviation correction method. The electronic device can be a server, or a terminal such as a vehicle-mounted terminal device, which is not specifically limited here.

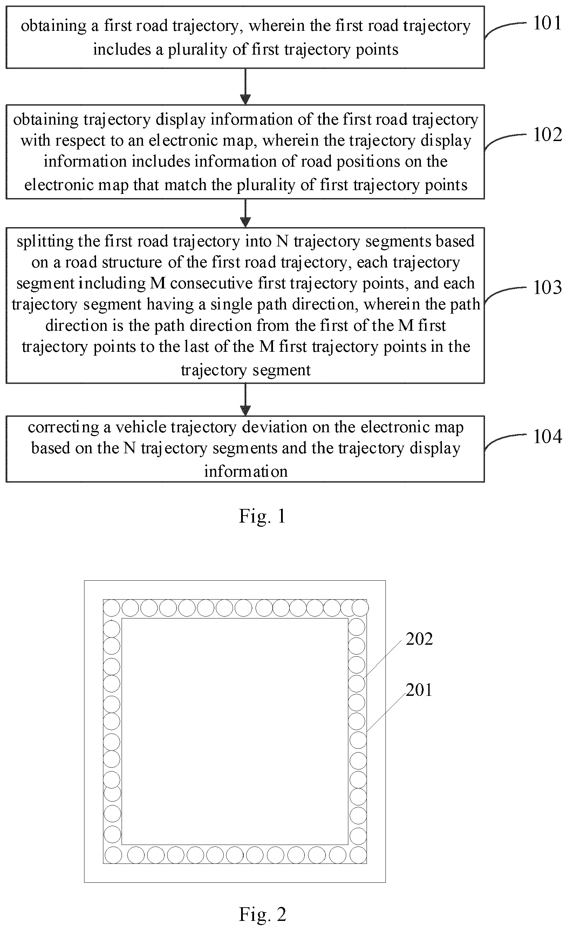

Referring to Fig. 1, a schematic flowchart of a vehicle trajectory deviation correction method according to an embodiment of the present disclosure is shown. As shown in Fig. 1, this method may include steps 101 to 104.

Step 101: obtaining a first road trajectory, wherein the first road trajectory includes a plurality of first trajectory points.

Here, the first road trajectory can be a collected trajectory of a preset road. The preset road can be a road trajectory already marked on an electronic map, such as a road network in a certain city; or the preset road can be a road trajectory not marked on an electronic map, such as a road in a relatively remote area.

In practical applications, this solution can be applied to scenarios where vehicle operation roads are known. The trajectory data of these known vehicle operation roads can be pre-processed, e.g., an operating vehicle in an industrial park, a municipal public transportation bus, a municipal cleaning vehicle and a freeway rescue vehicle. That is to say, based on the known vehicle operation roads, the road trajectories of the vehicle can be pre-collected to obtain the first road trajectory.

The first road trajectory may include a plurality of first trajectory points. The plurality of first trajectory points may only include directly-collected trajectory points, or may include both directly-collected trajectory points and trajectory points corrected based on collected trajectory points. This is not specifically limited here.

There are a variety of manners of obtaining the first road trajectory, such as, directly collecting trajectory points of known vehicle operation roads by using a positioning device to obtain the first road trajectory; or firstly collecting trajectory points of known vehicle operation roads and then performing de-noising and correction processing on collected trajectory points to obtain the first road trajectory; or obtaining the first road trajectory sent by other electronic devices; or indirectly obtaining trajectory points through other electronic devices such as a third-party map vendor, and generating the first road trajectory based on the obtained trajectory points.

In an optional implementation, a trajectory collection vehicle can be used to collect trajectory points of the known vehicle operation roads. After collection, the trajectory position information of consecutive trajectory points are obtained. The trajectory position information can include latitude and longitude. To ensure the accuracy of the first road trajectory, the accuracy of latitude and longitude can be up to 7 or more decimal places, and the distance between two adjacent trajectory points can be about 2 meters. In addition, the trajectory position information can further include the elevation angle between two trajectory points.

Referring to Fig. 2, Fig. 2 is a schematic view of a road trajectory collected by a trajectory collection vehicle. As shown in Fig. 2, multiple consecutive trajectory points 202 collected by the trajectory collection vehicle on the known vehicle operation roads 201 can form a road trajectory. The trajectory position information of some of the collected multiple consecutive trajectory points is shown in Table 1.

**Table 1 Trajectory position information of some of the collected multiple consecutive trajectory points**

| latitude | longitude | elevation angle |
|---|---|---|
| 39.60361003 | 109.7779231 | 165.21 |
| 39.60360257 | 109.7779261 | 162.93 |
| 39.60359505 | 109.7779294 | 160.75 |

The first road trajectory can be a road trajectory composed of directly collected multiple consecutive trajectory points, or a road trajectory composed of collected multiple consecutive trajectory points which have undergone de-noising and correction processing. Accordingly, the first road trajectory can be obtained after the trajectory collection vehicle collects the trajectory points. In an optional implementation, the first road trajectory sent by the trajectory collection vehicle can be received.

Step 102: obtaining trajectory display information of the first road trajectory with respect to an electronic map, wherein the trajectory display information includes information of road positions on the electronic map that match the plurality of first trajectory points;

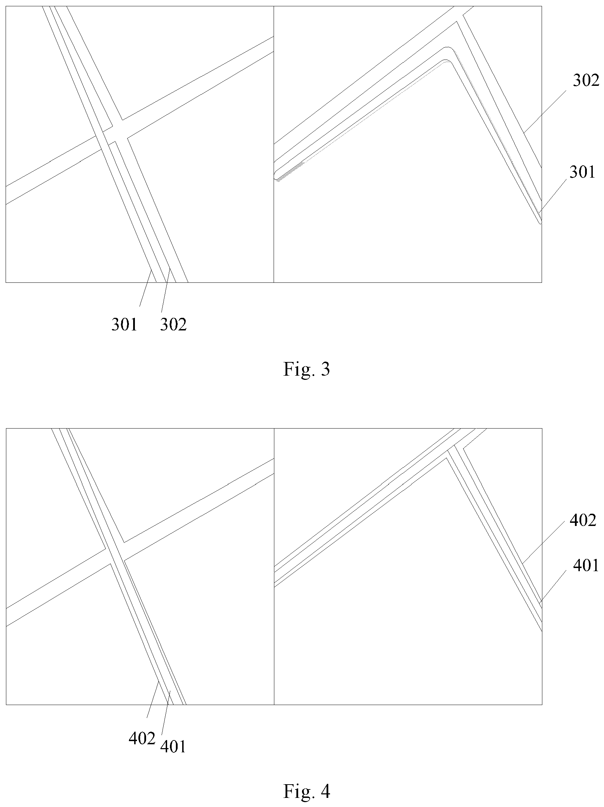

Here, since the position collection accuracy of the trajectory collection vehicle is usually relatively high, the first road trajectory collected by the trajectory collection vehicle should match the road network on the electronic map. However, in reality, due to issues such as the accuracy of the trajectory collection vehicle, the collection environment, and the accuracy of electronic map, the first road trajectory may not match the road network, resulting in a certain amount of trajectory drift. As shown in Fig. 3, the first road trajectory 301 does not match the road network 302 and there is a certain amount of trajectory drift.

The first road trajectory can be matched with roads on the electronic map to ensure that the display of the first road trajectory matches roads on the electronic map, i.e. the first road trajectory overlaps with the road network displayed on the electronic map, to ensure that subsequent real-time vehicle positions on the first road trajectory matches roads on the electronic map. This process can be called map matching.

Specifically, the plurality of first trajectory points can be compared with the electronic map, to update, according to the latitudes and longitudes on the electronic map, the trajectory display information of first trajectory points that have a trajectory deviation relative to the electronic map. Specifically, the first trajectory points can be displayed on the electronic map, to observe the matching status between the first road trajectory and actual road network displayed on the electronic map. For trajectory segments with a deviation, the first trajectory points are adjusted to the latitudes and longitudes that match the actual road network, to update the trajectory display information of the first trajectory points.

That is to say, since there may be inconsistencies between position accuracy of the actually collected first trajectory points and display accuracy on the electronic map, a deviation in the first road trajectory may result. In this case, actual position information of the first trajectory points and information of road positions on the electronic map that match the first trajectory points (i.e., the display information of the first trajectory points) can be associated and stored to obtain the trajectory display information of the first road trajectory with respect to the electronic map.

The comparing the plurality of first trajectory points with the electronic map can be manually or automatically matching the deviated first road trajectory with the road displayed on the electronical map, and determining the position information of the points on the electronic map that match the first trajectory points as the display information of the first trajectory points, to finally obtain the trajectory display information of the first road trajectory with respect to the electronic map. At this time, the trajectory display effect of the first road trajectory after map matching is as shown in Fig. 4. As can be seen from Fig. 4, the first road trajectory is map-matched to the road, and the first road trajectory 401 matches the road network 402.

In this way, by consolidating the first road trajectory and the electronic map, that is, by consolidating the two relatively stable elements, namely, the road and the electronic map, the problem of the deviation between the actual road and the trajectory displayed on the electronic map can be solved, and the matching between the vehicle's travelling trajectory and the actual road network can be improved.

Step 103: splitting the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment;
Wherein N is a positive integer and M is an integer greater than 1.

Here, the road structure of the first road trajectory refers to the road junctions included in the first road trajectory, and the road junctions can include crossroads and/or turning junctions.

That is to say, the first road trajectory can be split into segments, and the splitting principle can be intersection point-based splitting and turning point-based splitting, and each segment should be in a straight line or have a consistent direction. A consistent direction means that even if there are many bends in the middle of the path, the overall direction (which can refer to the path direction from the first of the first trajectory points to the last of the first trajectory points) is consistent. Wherein, the first of the first trajectory points can refer to the starting point of the trajectory segment, and the last of the first trajectory points can refer to the end point of the trajectory segment.

Intersection point-based splitting refers to: the intersection point of two trajectory lines intersecting at a crossroad on the first road trajectory is the starting point or end point of a trajectory segment and two trajectory segments can share this first trajectory point.

Turning point-based splitting refers to: a first trajectory point with the largest turning angle on the turning route of the first road trajectory is selected as a turning point for splitting the first road trajectory into segments.

Each trajectory segment resulting from the splitting is one stretch of path, and all the first trajectory points of the trajectory segment are consecutive and can be composed of a starting point, an end point, a middle point, and other points. The trajectory segment has a single direction, and the straight line connecting the starting point and the end point is the general direction of the trajectory segment.

The starting point and the end point of each trajectory segment are connected to each other, unless a certain trajectory segment is a dead-end road (which only has a starting point or an end point). According to the direction, the starting point and the end point of the trajectory segment, the mutual relationship and connection manner between different trajectory segments can be determined.

The process of this step can be called the structuring process of the first road trajectory. Structuring of road trajectory refers to logicizing the road trajectory and adding logical association information for each trajectory segment. Specifically, the first road trajectory can be split into N trajectory segments, and the structured information of the N trajectory segments can be stored.

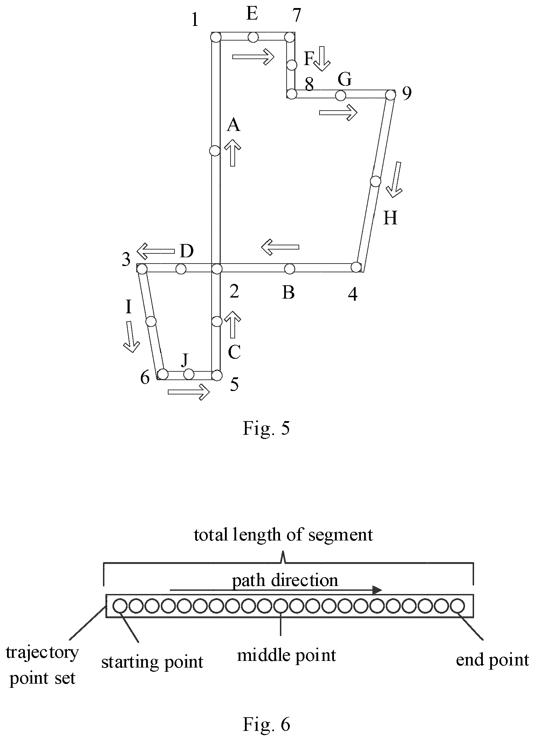

Referring to Fig. 5, Fig. 5 is a schematic view of splitting a first road trajectory. As shown in Fig. 5, each trajectory segment can include a starting point, an end point, and a middle point, and each trajectory segment can have a single direction. The straight line connecting the starting point and the end point is the general direction of the trajectory segment. A schematic view of structured elements of a trajectory segment is shown in Fig. 6, which include the starting point, the end point, the middle point, the path direction, a set of first trajectory points of the trajectory segment, and the total length of the trajectory segment. In addition, the structured information resulting from structuring the first road trajectory in Fig. 5 is shown in Table 2.

**Table 2 structured information resulting from structuring the first road trajectory segment**

| trajectory segment index | trajectory segment starting point | trajectory segment end point | trajectory segment middle point | total length of trajectory segment |
|---|---|---|---|---|
| A | 2 | 1 | middle point A | 20 |
| B | 4 | 2 | middle point B | 10 |
| C | 5 | 2 | middle point C | 10 |
| D | 2 | 3 | middle point D | 10 |
| E | 1 | 7 | middle point E | 10 |
| F | 7 | 8 | middle point F | 10 |
| G | 8 | 9 | middle point G | 10 |
| H | 9 | 4 | middle point H | 10 |
| I | 3 | 6 | middle point I | 10 |
| J | 6 | 5 | middle point J | 10 |

In above Table 2, the total length of trajectory segment is in units of meters (m).

Step 104: correcting a vehicle trajectory deviation on the electronic map based on the N trajectory segments and the trajectory display information.

In this step, the correction of the vehicle trajectory deviation can be based on fusion of three elements: known vehicle operation roads, real-time vehicle position information, and an electronic map. The known vehicle operation roads and electronic map are two relatively stable elements, while the real-time vehicle position information is a dynamic element with a certain error. The key is to perform differentiated processing of the stable and unstable elements.

Specifically, before correcting the vehicle trajectory deviation, the first road trajectory and the electronic map may be consolidated, that is, consolidating the two relatively stable elements, namely, the road and the electronic map , to solve the problem of the deviation between the actual road and the trajectory displayed on the electronic map.

On the premise of solving the problem of the deviation between the actual road and trajectory displayed on the electronic map, the vehicle position deviations are corrected based on the N trajectory segments to determine the actual position of the vehicle on the known vehicle operation roads, so as to correct the deviation between the real-time positioning position of the vehicle and the actual position of the vehicle, and improve the effect of correcting deviations of the vehicle position. Afterwards, based on the actual position of the vehicle, corresponding display information is obtained from the trajectory display information and displayed, so as to correct the deviation between the actual position of the vehicle and the display position of the vehicle on the electronic map. In this way, it is possible to correct the vehicle trajectory deviation on the electronic map, thereby avoiding drift of vehicle positions on the electronic map and improving the display effect of vehicle trajectories on an electronic map.

In this embodiment, by obtaining a first road trajectory, wherein the first road trajectory includes a plurality of first trajectory points; obtaining trajectory display information of the first road trajectory with respect to an electronic map, wherein the trajectory display information includes information of road positions on the electronic map that match the plurality of first trajectory points; splitting the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment; correcting a vehicle trajectory deviation on the electronic map based on the N trajectory sections and the trajectory display information, the first road trajectory is structured and split into N trajectory segments, subsequently real-time vehicle trajectory deviation correction can be performed directly based on the N trajectory segments, making the applicable scene of the method unconstrained.

Optionally, the step 101 specifically includes:
obtaining a second road trajectory, wherein the second road trajectory includes a plurality of second trajectory points;
correcting the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold.

In this implementation, the second road trajectory can be a road trajectory composed of directly collected trajectory points, or a road trajectory obtained by de-noising the directly collected trajectory points. The following description is based on the assumption that the second road trajectory is the road trajectory obtained by de-noising the directly collected trajectory points.

Specifically, a trajectory collection vehicle can be used to collect trajectory points of known vehicle operation roads, and noise elimination is performed on the collected trajectory points.

Assuming that the interval between collected trajectory points is *A* meters (m), the distance between two adjacent trajectory points among all trajectory points is calculated. A trajectory point whose distances to two adjacent trajectory points immediately before and after the trajectory point, respectively, are both greater than a preset threshold is eliminated, that is, the noise is eliminated. The preset threshold can be adjusted according to the accuracy of trajectory point collection and/or the interval between trajectory points.

After noises are preliminarily eliminated, the trajectory points are displayed on the electronic map. The continuity and smoothness of the road trajectory are observed manually, and existing noises are manually eliminated. After the noise elimination, the second road trajectory can be obtained, which can include a plurality of second trajectory points.

Afterwards, based on the distance between two adjacent second trajectory points among the plurality of second trajectory points and the road characteristic information of the second road trajectory, the entire trajectory of the second road trajectory is checked and corrected. The correction principle is that the distance between every two adjacent second trajectory points should be between a first preset threshold and a second preset threshold.

Wherein, the first preset threshold and the second preset threshold can be set according to actual conditions. Normally, the first preset threshold can be set to 2 m and the second preset threshold can be set to 5 m, that is, the distance between two adjacent second trajectory points is between 2 m and 5 m.

For the correction of second trajectory points in important junctions and point of interest (POI) areas included in road characteristic information of the second road trajectory, the first preset threshold and second preset threshold can be appropriately raised, and a point can be inserted between two adjacent second trajectory points if a distance therebetween is greater than the second preset threshold. If the method is applied to high-precision map scenarios, the first preset threshold and second preset threshold can also be raised, e.g., the distance between two adjacent second trajectory points can be less than 1 m.

In this implementation, by obtaining a second road trajectory, wherein the second road trajectory includes a plurality of second trajectory points; correcting the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold, the logic continuity, normativeness, and completeness of the road trajectory can be improved.

Optionally, the correcting the plurality of second trajectory points based on the distance between two adjacent second trajectory points among the plurality of second trajectory points to obtain the first road trajectory includes:
correcting, according to a preset rule, the plurality of second trajectory points based on the distance between two adjacent second trajectory points among the plurality of second trajectory points, to obtain the first road trajectory;
wherein the preset rule includes at least one of the following:
   deleting either one of the two adjacent second trajectory points in case that the distance between the two adjacent second trajectory points is less than or equal to the first preset threshold;
   adding a point between the two adjacent second trajectory points in case that the distance between the two adjacent second trajectory points is greater than or equal to the second preset threshold;
   adding a point between the two adjacent second trajectory points in case that the two adjacent second trajectory points fail to form a closed route corresponding to a road in a target road network.

In this implementation, the correction can include deleting a trajectory point and adding a point. The plurality of second trajectory points can be corrected according to a preset rule.

The preset rule can include:
deleting a second trajectory point in an area where the density of trajectory points is too high, for example, the too high density can result from repeated collection caused by a trajectory collection vehicle repeatedly travelling through the same route or result from the trajectory collection vehicle stopping or travelling slowly; the distance between two adjacent second trajectory points is determined and in case that the distance between the two adjacent second trajectory points is less than or equal to the first preset threshold, either one of the two adjacent second trajectory points may be deleted;
adding a point in an area where the density of trajectory points is too low, for example, the area may be an area where the trajectory points collected by a trajectory collection vehicle fail to form a closed route, or an area where the trajectory point density at a key junction and POI is too low; the coordinates of added points should comply with the coordinate latitude and longitude system established for all trajectory points and accuracy requirements.

The manners of adding a point include:
straight line adding: adding a point on a straight line formed by original trajectory points at both ends that bisects the straight line;
curve adding: drawing and smoothing a curve according to a road trajectory, and adding a point on the drawn curve that bisects the drawn curve;
irregular adding: adding a point manually according to actual road trajectories.

In this implementation, by deleting the second trajectory point in an area where the density of trajectory points is too high and adding a point in an area where the density of trajectory points is too low, the logic continuity, normativeness, and completeness of road trajectories can be improved.

Optionally, the step 104 specifically includes:
obtaining information of a position of a vehicle;
determining a target trajectory segment from the N trajectory segments, wherein the target trajectory segment is a trajectory segment among the N trajectory segments with a shortest projection distance to the position;
determining a target trajectory point in the target trajectory segment that corresponds to the position;
obtaining first display information corresponding to the target trajectory point from the trajectory display information;
displaying the target trajectory point on the electronic map based on the first display information.

In this implementation, the vehicle's position information can be the vehicle's real-time position information, that is, the position information reported by the vehicle in real-time.

The vehicle trajectory deviations can be corrected statically or dynamically based on the vehicle's position information. Whether to use static deviation correction or dynamic deviation correction can be decided according to actual conditions.

Specifically, uploading of real-time position information may begin when the vehicle initially starts; or in case that the vehicle is travelling on the road but the previously uploaded trajectory data is abnormal, in order to determine the trajectory that the vehicle is currently on, a static deviation correction method can be used to make the determination based on the current position information.

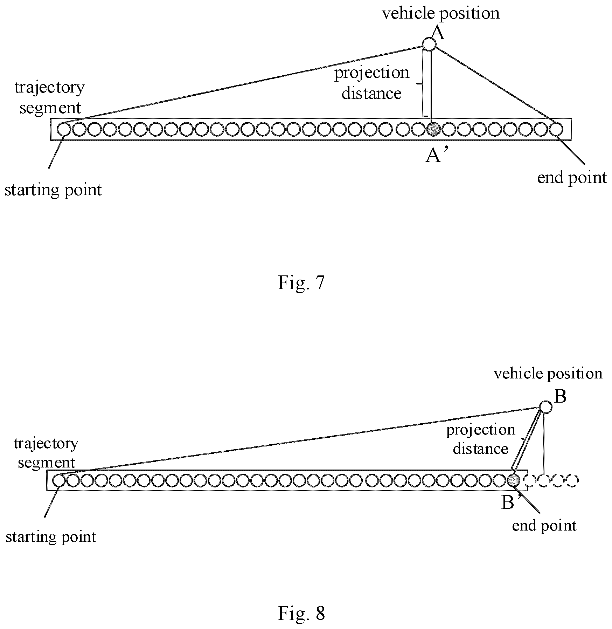

The specific steps of the static deviation correction method includes:
obtaining the real-time position of the vehicle;
traversing and calculating the distance between the position and its orthographic projection position on the straight line formed by the starting point and end point of each of the N trajectory segments, that is, the projection distance; wherein the trajectory segment corresponding to a minimum distance is the target trajectory segment, as shown in Fig. 7 and Fig. 8;
accordingly, as shown in Fig. 7 and Fig. 8, the trajectory point in the target trajectory segment that matches the orthographic projection position is the current trajectory point of the vehicle after the static deviation correction; wherein, the trajectory point in the target trajectory segment that matches the orthographic projection position can be a trajectory point among trajectory points of the target trajectory segment that is closest to the orthographic projection position.

In the process of static deviation correction, for processing trajectory segments which are not straight lines, the trajectory segments can be split into multiple straight sub-trajectory segments. These multiple sub-trajectory segments are all straight lines. These multiple sub-trajectory segments are used in place of the trajectory segment to calculate the projection distance of the vehicle position. If it is determined that the minimum distance corresponds to a sub-trajectory segment in the trajectory segment, then a target trajectory point in this sub-trajectory segment that is closest to the real-time position of the vehicle is calculated by a traversal or bisection method.

In special cases, there may be two trajectory segments corresponding to the minimum distance, in other words, the distances between the real-time position of the vehicle and its orthographic projection positions on two trajectory segments among the N trajectory segments, i.e., the projection distances, are equal. In this case, static deviation correction fails. Static deviation correction is performed again when the vehicle reports the next position coordinate, until static deviation correction succeeds.

In addition, when the distance between the real-time position of the vehicle and the target trajectory point obtained by the deviation correction calculation is greater than the range of vehicle positioning error, it can be determined that the vehicle is not on the first road trajectory, and the N trajectory segments are not used for correcting the vehicle trajectory deviation. For example, if a range of vehicle positioning error is up to 10 m and a distance between a real-time position of a vehicle and a target trajectory point obtained by the deviation correction calculation is 1 kilometer, it can be determined that the vehicle is not on the first road trajectory and then the N trajectory segments are not used for correcting the vehicle trajectory deviations.

After static deviation correction succeeds, the first display information corresponding to the target trajectory point can be obtained from the trajectory display information; and the target trajectory point is displayed on the electronic map based on the first display information.

Afterwards, a dynamic deviation correction can be used to correct the vehicle trajectory deviation. The dynamic deviation correction refers to correcting deviations by using previously obtained deviation correction results and real-time travelling direction and speed of the vehicle.

The specific steps of the dynamic deviation correction include:
obtaining the latest corrected trajectory point of the vehicle and the position information of the vehicle;
performing trajectory tracking determination according to the travel direction and speed of the vehicle and the connection relationship between trajectory segments. A specific process may be: if it is determined according to the speed and the time interval that the distance traveled by the vehicle is still within the trajectory segment, then the corrected target trajectory point is determined through the orthographic projection position;
if it is determined according to the speed and the time interval that the distance traveled by the vehicle may have exceeded this trajectory segment, then possible trajectory segments where the vehicle may be located among the N trajectory segments are determined according to the connection relationship between trajectory segments; the orthographic projection positions in the possible trajectory segments are determined, the target trajectory segment is determined from the possible trajectory segments, and the corrected target trajectory point of the vehicle is determined in the target trajectory segment.

When the distance between the real-time position of the vehicle and the target trajectory point obtained by deviation correction calculation is greater than the range of vehicle positioning error, it can be determined that the vehicle is not on the first road trajectory, and then the N trajectory segments are not used for correcting the vehicle trajectory deviation. In this case, the static deviation correction method can be used again to correct the vehicle trajectory deviation based on the next position information reported by the vehicle, or the static deviation correction method can be used again to correct the vehicle trajectory deviation when it is determined, based on each of multiple consecutive position information reported by the vehicle, that the distance between the real-time position of the vehicle and the target trajectory point obtained by deviation correction calculation is greater than the range of vehicle positioning error.

In this implementation, the vehicle positions are usually matched with the trajectory points on the trajectory segments. After a successful match, the trajectory point on the trajectory segment is used to replace the position reported by the vehicle for display. Since the trajectory point has been map-matched to the electronic map, the position of the displayed vehicle has undergone the deviation correction operation, thereby achieving a good display effect.

Optionally, before the displaying the target trajectory point on the electronic map based on the first display information, the method further includes:
obtaining a display point set of the N trajectory segments, wherein the display point set includes K first trajectory points of each of the N trajectory segments, and the K first trajectory points of each of the N trajectory segments are used for display, wherein K is a positive integer less than or equal to M;
obtaining second display information of each first trajectory point in the display point set from the trajectory display information;
displaying the each first trajectory point in the display point set on the electronic map based on the second display information.

In this implementation, the trajectory points serve two purposes when being displayed on the electronic map: one is to mark the position, and the other is to display the trajectory. Not all trajectory points are valuable enough to display their positions, and not all trajectory points carry the same weight for trajectory display. Therefore, trajectory points which are valuable for position display and trajectory display can be filtered from the plurality of first trajectory points to form a display point set. The display point set is much smaller in size than the trajectory point set in the first road trajectory, which significantly improves the display efficiency of the first road trajectory on the electronic map without compromising the display of important information, thereby achieving a good balance between display efficiency and display effect.

Specifically, trajectory points located at the starting point, end point, and middle point of each trajectory segment can be retained, meanwhile trajectory points at the POIs in all trajectory segments and trajectory points located 10 meters before and after the POIs can be retained.

Thinning is performed on the trajectory points in the N trajectory segments. Many ways to thin the trajectory points are available, and a selection can be made according to specific route characteristics. For example, whether a trajectory point is to be included in the display point set is determined based on the included angle formed by three consecutive trajectory points. If the included angle is greater than a certain threshold, the trajectory point is retained. If the included angle is continuously less than a certain threshold, but the cumulative length of the line segment is greater than 20 meters, one trajectory point is retained and included in the display point set. The threshold can be adjusted according to the characteristics of the route.

All retained trajectory points are included in the display point set, and the display point set is used for displaying the first road trajectory on the electronic map.

In this implementation, by grouping the trajectory points for vehicle position logical determination and the trajectory points for trajectory display, the trajectory points in the display point set are used to display the first road trajectory in conjunction with the electronic map, and all trajectory points in the first road trajectory are used for logical determination in conjunction with the real-time positions of the vehicle. When displaying the real-time position and trajectory of the vehicle, a good display effect and efficiency can be achieved by simply using the target trajectory points corresponding to the corrected vehicle position in conjunction with the display point set. In this way, a favorable balance between the efficiency and the effect of vehicle trajectory tracking and display can be achieved.

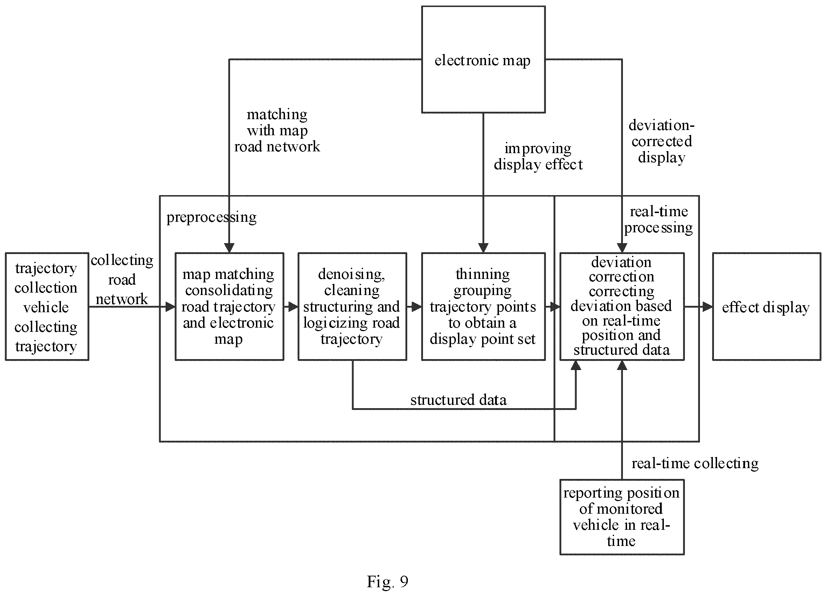

Referring to Fig. 9, Fig. 9 is a schematic flowchart of a specific example of a vehicle trajectory deviation correction method according to an embodiment of the present disclosure. As shown in Fig. 9, the trajectory collection vehicle performs road trajectory collection, performs a map-matching operation on the collected road trajectory, that is, consolidating the road trajectory and the electronic map, performs de-noising and cleaning on the road trajectory, that is, structuring and logicizing the road trajectory, performs thinning on the road trajectory, that is, grouping the trajectory points to obtain a display point set, and then corrects the vehicle trajectory deviation. Specifically, the correcting the vehicle trajectory deviation is based on the real-time position of the vehicle and the structured information of the road trajectory, wherein the real-time position of the vehicle can be the position information reported by the monitored vehicle in real-time. Finally, based on the display information of the trajectory points, the corrected target trajectory points and the trajectory points in the display point set are displayed on the electronic map.

It should be noted that, the steps of map matching, de-noising, cleaning and thinning in the entire process are all completed in the preprocessing stage. In this way, most of the computations are completed in advance. When real-time position information of a vehicle is reported, the computational burden to correct vehicle trajectory deviations based on real-time positions of the vehicle can be greatly reduced.

In other words, by performing, in advance, all the calculations of stable elements that can be performed in advance, discrete algorithms are transformed into a logical algorithm, which can bring great improvement to not only the algorithmic computation but also the display efficiency. This mitigates real-time computational burden and has high efficiency, thereby supporting the monitoring of a larger quantity of vehicles. In addition, by preprocessing display points and logical points, a loose coupling separation between display logic and positioning logic is achieved, thereby attaining a favorable display effect.

The following describes the vehicle trajectory deviation correction apparatus according to embodiments of the present disclosure.

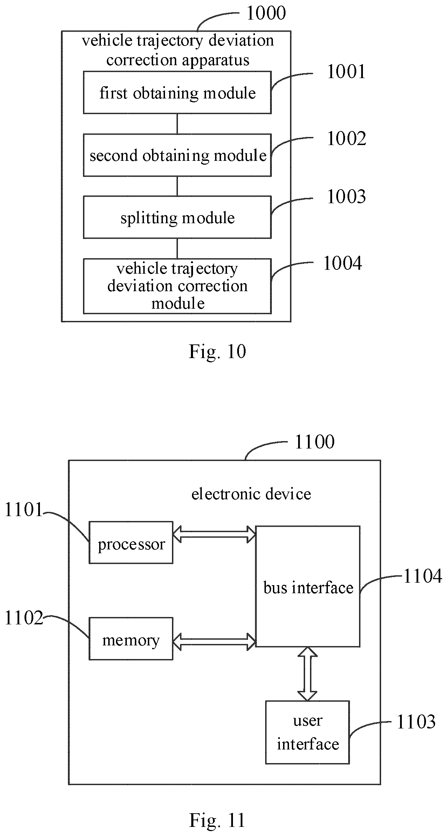

Referring to Fig. 10, Fig. 10 is a schematic structural view of a vehicle trajectory deviation correction apparatus according to an embodiment of the present disclosure. As shown in Fig. 10, the vehicle trajectory deviation correction apparatus 1000 includes:
a first obtaining module 1001, configured to obtain a first road trajectory, wherein the first road trajectory includes a plurality of first trajectory points;
a second obtaining module 1002, configured to obtain trajectory display information of the first road trajectory with respect to an electronic map, wherein the trajectory display information includes information of road positions on the electronic map that match the plurality of first trajectory points;
a splitting module 1003, configured to split the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
a vehicle trajectory deviation correction module 1004, configured to correct a vehicle trajectory deviation on the electronic map based on the N trajectory segments and the trajectory display information.

Optionally, the first obtaining module 1001 includes:
a first obtaining unit, configured to obtain a second road trajectory, wherein the second road trajectory includes a plurality of second trajectory points;
a correction unit, configured to correct the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold.

Optionally, the correction unit is configured to correct, according to a preset rule, the plurality of second trajectory points based on the distance between two adjacent second trajectory points among the plurality of second trajectory points, to obtain the first road trajectory;
wherein the preset rule includes at least one of the following:
deleting either one of the two adjacent second trajectory points in case that the distance between the two adjacent second trajectory points is less than or equal to the first preset threshold;
adding a point between the two adjacent second trajectory points in case that the distance between the two adjacent second trajectory points is greater than or equal to the second preset threshold;
adding a point between the two adjacent second trajectory points in case that the two adjacent second trajectory points fail to form a closed route corresponding to a road in a target road network.

Optionally, the vehicle trajectory deviation correction module 1004 includes:
a second obtaining unit, configured to obtain information of a position of a vehicle;
a first determining unit, configured to determine a target trajectory segment from the N trajectory segments, wherein the target trajectory segment is a trajectory segment among the N trajectory segments with a shortest projection distance to the position;
a second determining unit, configured to determine a target trajectory point in the target trajectory segment that corresponds to the position;
a third obtaining unit, configured to obtain first display information corresponding to the target trajectory point from the trajectory display information;
a vehicle position display unit, configured to display the target trajectory point on the electronic map based on the first display information.

Optionally, the apparatus further includes:
a third obtaining module, configured to obtain a display point set of the N trajectory segments, wherein the display point set includes K first trajectory points of each of the N trajectory segments, and the K first trajectory points of each of the N trajectory segments are used for display, wherein K is a positive integer less than or equal to M;
a fourth obtaining module, configured to obtain second display information of each first trajectory point in the display point set from the trajectory display information;
a route trajectory display module, configured to display the each first trajectory point in the display point set on the electronic map based on the second display information.

The vehicle trajectory deviation correction device 1000 can implement the various processes implemented in the foregoing vehicle trajectory deviation correction method embodiments with the same technical effects achieved. To avoid repetition, details are not described herein again.

The following describes an electronic device according to embodiments of the present disclosure.

Referring to Fig. 11, Fig. 11 is a schematic structural view of an electronic device according to an embodiment of the present disclosure. As shown in Fig. 11, the electronic device 1100 includes: a processor 1101, a memory 1102, a user interface 1103, and a bus interface 1104.

The processor 1101 is configured to read a program in the memory 1102 and perform the following process:
obtaining a first road trajectory, wherein the first road trajectory includes a plurality of first trajectory points;
obtaining trajectory display information of the first road trajectory with respect to an electronic map, wherein the trajectory display information includes information of road positions on the electronic map that match the plurality of first trajectory points;
splitting the first road trajectory into N trajectory segments based on a road structure of the first road trajectory, each trajectory segment including M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
correcting a vehicle trajectory deviation on the electronic map based on the N trajectory segments and the trajectory display information.

In Fig. 11, the bus architecture can include any number of interconnected buses and bridges, and connects various circuits including one or more processors represented by the processor 1101 and memory represented by the memory 1102. The bus architecture can also connect various other circuits such as peripherals, voltage regulators and power management circuits, which is well known in the art. Therefore, a detailed description thereof is omitted herein. The bus interface 1104 provides an interface. For different user equipment, user interface 1103 can also be an interface that can externally and internally connect required devices. The connected devices include, but are not limited to: a keypad, a display, a speaker, a microphone, a joystick, etc.

The processor 1101 is responsible for managing bus architecture and general processing. The memory 1102 can store data used by processor 1101 when performing operations.

Optionally, the processor 1101 is further configured to:
obtain a second road trajectory, wherein the second road trajectory includes a plurality of second trajectory points;
correct the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold.

Optionally, the processor 1101 is further configured to:
correct, according to a preset rule, the plurality of second trajectory points based on the distance between two adjacent second trajectory points among the plurality of second trajectory points, to obtain the first road trajectory;
wherein the preset rule includes at least one of the following:
   deleting either one of the two adjacent second trajectory points in case that the distance between the two adjacent second trajectory points is less than or equal to the first preset threshold;
   adding a point between the two adjacent second trajectory points in case that the distance between the two adjacent second trajectory points is greater than or equal to the second preset threshold;
   adding a point between the two adjacent second trajectory points in case that the two adjacent second trajectory points fail to form a closed route corresponding to a road in a target road network.

Optionally, the processor 1101 is further configured to:
obtain information of a position of a vehicle;
determine a target trajectory segment from the N trajectory segments, wherein the target trajectory segment is a trajectory segment among the N trajectory segments with a shortest projection distance to the position;
determine a target trajectory point in the target trajectory segment that corresponds to the position;
obtain first display information corresponding to the target trajectory point from the trajectory display information;
display the target trajectory point on the electronic map based on the first display information.

Optionally, the processor 1101 is further configured to:
obtain a display point set of the N trajectory segments, wherein the display point set includes K first trajectory points of each of the N trajectory segments, and the K first trajectory points of each of the N trajectory segments are used for display, wherein K is a positive integer less than or equal to M;
obtain second display information of each first trajectory point in the display point set from the trajectory display information;
display the each first trajectory point in the display point set on the electronic map based on the second display information.

Preferably, an embodiment of the present disclosure further provides an electronic device, including a processor 1101, a memory 1102, and a computer program stored in the memory 1102 and capable of running on the processor 1101, wherein the processor 1101 is configured to execute the computer program to implement various steps in the foregoing vehicle trajectory deviation correction method embodiments with the same technical effects achieved. To avoid repetition, details are not described herein again.

An embodiment of the present disclosure further provides a computer-readable storage medium storing therein a computer program, wherein the computer program is configured to be executed by a processor to implement various steps in the foregoing vehicle trajectory deviation correction method embodiments with the same technical effects achieved. To avoid repetition, details are not described herein again. The computer-readable storage medium is, e.g., a read-only memory (ROM), a random access memory (RAM), a magnetic disk, or an optical disc, etc.

A person skilled in the art may be aware that, the exemplary units and algorithm steps described in connection with the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed system and method may be implemented in other manners. For example, the described system embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

If the functions are implemented in a form of a software functional unit and sold or used as an independent product, the functions may be stored in a computer-readable storage medium. Based on such an understanding, essential parts, or parts contributing to the related art, of the technical solution of the present disclosure may be implemented in a form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a universal serial bus (USB) flash drive, a removable hard disk, an ROM, an RAM, a magnetic disk, or an optical disc.

The aforementioned are merely specific implementations of the present disclosure, but the scope of the disclosure is by no means limited thereto. Any modifications or replacements that would easily occurred to those skilled in the art, without departing from the technical scope disclosed in the disclosure, should be encompassed in the scope of the present disclosure. Therefore, the scope of the present disclosure is to be determined by the scope of the claims.

## Claims

1. A vehicle trajectory deviation correction method, comprising:
obtaining a first road trajectory, wherein the first road trajectory comprises a plurality of first trajectory points;
obtaining trajectory display information of the first road trajectory with respect to an electronic map, wherein the trajectory display information comprises information of road positions on the electronic map that match the plurality of first trajectory points;
splitting the first road trajectory into N trajectory segments based on a road structure of the first road trajectory, each trajectory segment comprising M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
correcting a vehicle trajectory deviation on the electronic map based on the N trajectory segments and the trajectory display information.

2. The vehicle trajectory deviation correction method according to claim 1, wherein the obtaining the first road trajectory comprises:
obtaining a second road trajectory, wherein the second road trajectory comprises a plurality of second trajectory points;
correcting the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold.

3. The vehicle trajectory deviation correction method according to claim 2, wherein the correcting the plurality of second trajectory points based on the distance between two adjacent second trajectory points among the plurality of second trajectory points to obtain the first road trajectory comprises:
correcting, according to a preset rule, the plurality of second trajectory points based on the distance between two adjacent second trajectory points among the plurality of second trajectory points, to obtain the first road trajectory;
wherein the preset rule comprises at least one of the following:
deleting either one of the two adjacent second trajectory points in case that the distance between the two adjacent second trajectory points is less than or equal to the first preset threshold;
adding a point between the two adjacent second trajectory points in case that the distance between the two adjacent second trajectory points is greater than or equal to the second preset threshold;
adding a point between the two adjacent second trajectory points in case that the two adjacent second trajectory points fail to form a closed route corresponding to a road in a target road network.

4. The vehicle trajectory deviation correction method according to claim 1, wherein the correcting the vehicle trajectory on the electronic map based on the N trajectory segments and the trajectory display information comprises:
obtaining information of a position of a vehicle;
determining a target trajectory segment from the N trajectory segments, wherein the target trajectory segment is a trajectory segment among the N trajectory segments with a shortest projection distance to the position;
determining a target trajectory point in the target trajectory segment that corresponds to the position;
obtaining first display information corresponding to the target trajectory point from the trajectory display information;
displaying the target trajectory point on the electronic map based on the first display information.

5. The vehicle trajectory deviation correction method according to claim 4, wherein before the displaying the target trajectory point on the electronic map based on the first display information, the method further comprises:
obtaining a display point set of the N trajectory segments, wherein the display point set comprises K first trajectory points of each of the N trajectory segments, and the K first trajectory points of each of the N trajectory segments are used for display, wherein K is a positive integer less than or equal to M;
obtaining second display information of each first trajectory point in the display point set from the trajectory display information;
displaying the each first trajectory point in the display point set on the electronic map based on the second display information.

6. A vehicle trajectory deviation correction apparatus, comprising:
a first obtaining module, configured to obtain a first road trajectory, wherein the first road trajectory comprises a plurality of first trajectory points;
a second obtaining module, configured to obtain trajectory display information of the first road trajectory with respect to an electronic map, wherein the trajectory display information comprises information of road positions on the electronic map that match the plurality of first trajectory points;
a splitting module, configured to split the first road trajectory into N trajectory segments based on a road structure of the first road trajectory, each trajectory segment comprising M consecutive first trajectory points, and each trajectory segment having a single path direction, wherein the path direction is the path direction from the first of the M first trajectory points to the last of the M first trajectory points in the trajectory segment, wherein N is a positive integer and M is an integer greater than 1;
a vehicle trajectory deviation correction module, configured to correct a vehicle trajectory deviation on the electronic map based on the N trajectory segments and the trajectory display information.

7. The vehicle trajectory deviation correction apparatus according to claim 6, wherein the first obtaining module comprises:
a first obtaining unit, configured to obtain a second road trajectory, wherein the second road trajectory comprises a plurality of second trajectory points;
a correction unit, configured to correct the plurality of second trajectory points based on a distance between two adjacent second trajectory points among the plurality of second trajectory points, to obtain the first road trajectory, wherein a distance between adjacent first trajectory points in the first road trajectory is greater than a first preset threshold and less than a second preset threshold.

8. The vehicle trajectory deviation correction apparatus according to claim 7, wherein the correction unit is configured to correct, according to a preset rule, the plurality of second trajectory points based on the distance between two adjacent second trajectory points among the plurality of second trajectory points, to obtain the first road trajectory;
wherein the preset rule comprises at least one of the following:
deleting either one of the two adjacent second trajectory points in case that the distance between the two adjacent second trajectory points is less than or equal to the first preset threshold;
adding a point between the two adjacent second trajectory points in case that the distance between the two adjacent second trajectory points is greater than or equal to the second preset threshold;
adding a point between the two adjacent second trajectory points in case that the two adjacent second trajectory points fail to form a closed route corresponding to a road in a target road network.

9. The vehicle trajectory deviation correction apparatus according to claim 6, wherein the vehicle trajectory deviation correction module comprises:
a second obtaining unit, configured to obtain information of a position of a vehicle;
a first determining unit, configured to determine a target trajectory segment from the N trajectory segments, wherein the target trajectory segment is a trajectory segment among the N trajectory segments with a shortest projection distance to the position;
a second determining unit, configured to determine a target trajectory point in the target trajectory segment that corresponds to the position;
a third obtaining unit, configured to obtain first display information corresponding to the target trajectory point from the trajectory display information;
a vehicle position display unit, configured to display the target trajectory point on the electronic map based on the first display information.

10. The vehicle trajectory deviation correction apparatus according to claim 9, further comprising:
a third obtaining module, configured to obtain a display point set of the N trajectory segments, wherein the display point set comprises K first trajectory points of each of the N trajectory segments, and the K first trajectory points of each of the N trajectory segments are used for display, wherein K is a positive integer less than or equal to M;
a fourth obtaining module, configured to obtain second display information of each first trajectory point in the display point set from the trajectory display information;
a route trajectory display module, configured to display the each first trajectory point in the display point set on the electronic map based on the second display information.

11. An electronic device, comprising: a processor, a memory, and a computer program stored in the memory and capable of running on the processor, wherein the computer program is configured to be executed by the processor to implement the steps in the vehicle trajectory deviation correction method according to any one of claims 1 to 5.

12. A computer-readable storage medium storing therein a computer program, wherein the computer program is configured to be executed by a processor to implement the steps in the vehicle trajectory deviation correction method according to any one of claims 1 to 5.
